# EUROPEAN PATENT APPLICATION

(11) **EP 1 827 006 A2**
(43) Date of publication of application: **29.08.2007**
(21) Application number: 06380145.0
(22) Date of filing: 30.05.2006
(51) Int. Cl.: H04N 1/60

(54) **Prepress procedure with enhanced gamut for printing systems**

(30) Priority: 23.02.2006 AR 0600658
(71) Applicant: Bolognino, Oscar Dante, Ciudad De Cordoba, Provincia De Cordoba (AR); Sipack, S.A., Ciudad de Cordoba, Provincia de Cordoba (AR)
(72) Inventor: De Llamas, Antonio Carlos, (5000)Cordoba Provincia de Cordoba (AR)
(74) Representative: Polo Flores, Luis Miguel

(57) **Abstract**

This procedure consists in a 2^{nd} stage in which the "Pantone" scale is reproduced in the own chart with the cyan, magenta and yellow colours from performing a pure reduction synthesis of colours.

It also consists in a 3^{rd} stage with three steps. The first step is about the digital separation of the part composed with the CYM colours from that of the "Pantone" colours; the second step consists of processing the part that includes the CYM colours, using a TetraChtome output profile made up by the inks of enhanced gamut and a TetraChrome input profile made up by an owner profile with 7000 spectrometric inputs to obtain a file of suitable colours to its reproduction with inks of enhanced gamut or normal gamut and the third step is is about the transformation of the "Pantone" colours from the original file to the own colour chart.

This procedure uses a software that provides a rippeared medium of the in the third and fourth stages the software used provides a rippeared medium of the colour in 16 bits.

## Description

This invention consists in a prepress procedure with enhanced gamut for printing systems that use technology of colour management in the processing of preprinting digital files.

In order to understand this invention so that it can be put into practice with ease, the following paragraphs give a detailed description in a favorite way, making reference in it to the attached drawings, the whole as a purely demonstrative example but not restrictive of the invention. Their components can be selected among several equivalents without leaving the principles of the invention established in this document.

PRIOR ART: The search number 03-04-48 performed by the Department of Technological Information has identified the documents US 6024018, US 5530656, US 5224421, US 4881181 and US 4649502 as relating to the printing, using CMYK inks.

Apart from the above search, the documents US 5958124 and US 4612052 were also found in relation to special inks for rotogravure.

By analyzing the documents, the patent US 6024018 refers to a printing color control system that optimizes the assembly of several ink keys in a printing press according to a witness image and a reference image. The witness image and reference image include several key ink areas corresponding to several ink areas which include several interest regions. The system includes a unit to scan a printing area, producing the reference and the witness images; a unit to summarize the color information based on the current color image of the witness image; a unit to measure the deviations from color with regard to the reference image and a unit to analyze and compare the global characteristics of the interest regions that substantially include the color gamut of the witness image with the characteristics of the reference image. The analysis and the comparison are based on a plurality of interest regions placed in the same key ink area. Both the analysis and the comparison work to produce an ink change (CMYK) to be applied to a plurality of ink keys. The system also includes a unit to apply those changes (CMYK) to that plurality of ink keys.

However, the patent US 5530656 refers to a method to control the ink supply in a printing machine in order to print halftones.

The patent US 5224421 refers to a method to adjust and control the color in a printing press based on the color density spectrum.

The document US 4881181 refers to a procedure to determine the ink unit control variables in a printing press which allows performing an ink area control with a repetitive cycle of the measured areas.

Finally, the document US 4649502 is a procedure and a device to test the printing quality and regulate the ink supply in a photo-offset printing machine.

From the analysis of such documents it is deduced that none of them afects this invention.

This invention allows obtaining a balanced printing matrix to achieve a printing from three basic colours (CMY) to which the black colour is eventually added but only as an extra colour to be used in printing machines with inadequate registration.

The invention allows obtaining, from these three colours (CMY), the reproduction of most of the spot colours, such as the colours of a "Pantone" catalogue, using special inks of enhanced gamut or normal gamut with more reduced results.

By using the matrix and the inks of enhanced gamut, the special ink mixtures are avoided and it is not neccesary to replace cylinders or trays to perform different jobs.

We must declare that in the procedures of the prior art, the reproduction of the "Pantone" colours implies the use of different ink combinations.

That's why that in the prior art and in order not to waste inks, because the remain of the mixture cannot be stored, the combinations need an estimate which must be as rough as possible about the amount to use.

On the other hand, a small quantity would force to prepare a new mixture with the almost risk of not achieving the same colour.

On the other hand, even if the ink calculation to combine is almost accurate it does not leave the possibility that the client orders a new printing job when the previous one is still in the market.

In similar cases it is possible to observe that in a same product shown to the public there are differences in colours in the labels.

OBJECT OF THE INVENTION: The procedure revealed in the following paragraphs has been thought to reduce the number of basic inks used and to standardize printing conditions. In other words, this procedure allows searching the stability of the printing conditions along the time, from the analysis of a series of variables such as temperature, ink, speed, dilution, densities of the full colors, viscosity, etcetera.

The standardization achieved with the procedure, and specially with the use of a three-colour reproduction, allows reducing the periods of inactivity, increasing the efficiency and the production.

With the new achieved ICC profiles we obtain 7000 spectrometric inputs, increasing radically the chances of obtaining colours and shades of a very high quality.

This procedure allows photochromes of more vivid colours, improves the reproduction of the colours in the images and replaces inks of spot colours (Pantone) with a three-colour printing, saving cylinders and reducing the ink stock.

The obtained printing matrix allows a tone balance between the full colours and the half tones, giving the possibility of reproduction of the most of the spot colours, such as the colours of the "Pantone" catalogue.

With the use of such matrix and of enhanced gamut inks, or as it was said before, of normal gamut with more reduced result, we avoid the mixtures of inks to obtain the different colours to use, and for that reason it is not necessary to replace cylinders or trays previously used to obtain certain colours or shades. This three-colour reproduction allows using the same trays to perform different jobs.

This, undoubtedly, allows a saving in mixtures whose remain is usually removed and achieves to standardize the colours printed in different printing jobs, even if in the last case there can be a slight difference which is attributable, exclusively, to the different ink quantities.

DESCRIPTION: Basically this invention is composed of several stages and consists in a prepress procedure with enhanced gamut for printing systems that use technology of colour management in the processing of preprinting digital files. The first stage is about the determination of the final product to obtain; the second stage is about the preparation of photochromes. The third stage determines the transfer from a standard scale, for example, "Pantone", to an own scale; the fourth scale consists in the reproduction of the tone scale; the fifth stage is about the retouching to obtain the final product and the sixth stage is abouth the preparation of the engraving images and the storage of the information.

HOW IT WORKS: After establishing the stage sequence to explain the nature of the invention, then it is complemented with their functional and operative relationship and the result they provide.

We are going to explain the different stages in order to obtain a prepress proceeding with enhanced gamut which is suitable for its use in printing systems that use technology of colour management in the processing of the pre printing digital files such as Offset, Flexography, Letterpress, DTP Digital systems and similar ones.

The fisrt stage consists of determining the final product to obatin. For that reason, the technical department interviews the client on many occassions in order to manage to reproduce what the client needs and to contribute new ideas.

The second stage consists of preparing the photochromes and the necessary flat colours via digital colour management to satisfy the order on the basis of the colours of the "Pantone" scale as the cyan, magenta and yellow colours from the original file.

Taking into account that this procedure has been developed to be applied in a prepress of three colors, this "Pantone" scale must be achieved from the combination of such three colours, that is to say, the cyan, the magenta and the yellow ones.

The use of blank ink is added to this three-colour reproduction but only as an extra colour and in printing machines with inadequate registration.

Eventually, the white color can be needed in order to use it as the printing base in "OPP" materials which are now widely used.

The third stage consists in using an own colour chart and equivalent to the so called "Pantone" scale and a software that allows transfering the colours from the "Pantone" scale to the own colour chart.

In this third stage, there are three steps. In the first step, the part composed of CMY colours is digitally separated from that of the "Pantone" colours. In the second step, the part that includes the CMY colours is processed, using the TetraChrome output and input profiles to obtain a file. Those colours are put in this file, adjusting them to its reproduction with inks of enhanced gamut.

Finally, in the third step the spot colours ("Pantone") change completely from the original file to the scale of the own colour chart

During this transformaton there are three steps. The first one consists in selecting those colours which are nearer to the original. The second step is about the application of the secondary curves to achieve the half tones of the spot colours and in that way to turn them into full colours. Finally, the third step consists in developing tertiary curves used for the gradations.

The new TetraChrome profiles have 7000 spectometric inputs by which the software used includes all the necessary information for the processing of the digital graphic files.

The inventor achieves to print in a three-colour reproduction (CMY) as a consequence of performing a pure reduction synthesis of colours, reserving the use of the black ink only as an extra colour which is used by printers with a inadequate registration as it was said before.

The software used also involves the management of all the information related to profiles, structures of the substratums, clients, plants, printers, flat colours that have been used, eventual manual retouchings that have been performed. A new colour rippeared system in 16 bits is also added to this software. This new system allows much more accurate transformations that improve the quality of reproduction of the softer tones, the gradations, etc.

The fourth stage with the adequate software consists in the reproduction of the tone scale until to achieve a 97% of approximation to the colours of the own colour chart. The fifth stage, only applicable if it is necessary, consists in the calibration by software and with manual retouching of this tone scale until to achieve a 99% of approximation to the tones searched, achieving the final image.

As a result we obtain a set of engraving images that reproduce in a suitable way all the tone scale with a tone reproduction that reaches to 1%. In the procedures of the prior art this tone value is over the 3 or 4%.

The reduced tone value which is achieved arises from considering TetraChrome input and output profiles, performing a suitable calibration to the colour test system. So, the TetraChrome output profile will be that of the inks of enhanced gamut or of the normal gamut with more reduced results which are used, meanwhile the TetraChrome input profile will be, preferably, a standardized profile.

In order to achieve the desired tone value, the inventor uses a color chart created by himself. This color chart is preferably of enhanced gamut in order to allow the accurate reproduction of the largest number of spot colors ("Pantone" scale) for being inside the gamut or achieve less color difference (Delta E) in those colors which are still outside the gamut.

The accurate reproduction of a much higher percentage of "Pantone" colors than the one with the traditional systems is achieved, from the cyan (C), magenta (M) and yellow (Y) colors to which the white (W) color is eventually added and, also eventually the black (K) one, and thanks to the use of special inks.

Likewise, with this invention, a much higher approximation is achieved in those colours whose reproduction is not accurate.

This invention allows the printing of much more vivid color images or photochromes than the ones obtained with the procedures of the prior art. This improvement in the accuracy and the image coloring is still kept when using inks of standard gamut.

In the fourth stage, a software of colour analysis is used. With this software, the approximation can be taken between a 96 % and a 97% of the tone original value in relation to the color chart (6), using in the process the secondary and the tertiary curves specially developed for such purpose.

It is not possible, with a software of colour analysis, to take the approximation to the original color more than in the referred magnitude and that is the reason that in the fifth stage we check the result obtained in the previos one.

As all difference of colour is given by a technical question which is the result of the way in which the original is obtained, the solution must take into account the possibility of correcting it.

In effect, it is usual that the original is obtained through an image scanning process, that is, through light and, therefore, with predominance of the red (R), green (G) and blue (B) colours which have a wider gamut than that of the three CMY colors; therefore, some tones will be lost in the transformation process during that stage.

Taking into account that the human eye receives the colours on the same predominance base (RGB), a skilled worker, working on the monitor and not on the software, can perform, if it is necessary, a manual retouching to take the approximation to a 99% of the original colours.

In that way the engraving images are obtained and they will allow preparing the matrix or printing cylinder.

The use of several programs has been emphasized to manage the variables presented. For that reason, in order to use all the programs, an image processing software is provided and it enables an almost complete automatization.

The sixth stage consists in preparing the engraving images to use them in the engraving cylinder and of the storage of all the information collected during this procedure in a suitable medium such as a compact disc or the similar.

This will allow repeating the order, reproducing the information stored in that suitable medium.

In this way, one of the possible stage sequences has been described. The stage sequences take to realize the invention and the way it works. The document is also complemented with the synthesis of the invention contained in the claim terms which are added as follows:

(The claims continue on page 13).

### TECHNICAL SHEET

This procedure consists in a 2^{nd} stage in which the "Pantone" scale is reproduced in the own chart with the cyan, magenta and yellow colours from performing a pure reduction synthesis of colours.

It also consists in a 3^{rd} stage with three steps. The first step is about the digital separation of the part composed with the CYM colours from that of the "Pantone" colours; the second step consists of processing the part that includes the CYM colours, using a TetraChtome output profile made up by the inks of enhanced gamut and a TetraChrome input profile made up by an owner profile with 7000 spectrometric inputs to obtain a file of suitable colours to its reproduction with inks of enhanced gamut or normal gamut and the third step is is about the transformation of the "Pantone" colours from the original file to the own colour chart.

This procedure uses a software that provides a rippeared medium of the in the third and fourth stages the software used provides a rippeared medium of the colour in 16 bits.

Having described and determined the nature of the invention, its scope and the way in which it can be put into practice in its essential idea, we hereby declare it as an invention and of exclusive property the following:

## Claims

1. Prepress procedure with enhanced gamut for printing systems that use technology of colour management in the processing of preprinting digital files that consists of six stages. The first one is about the determination of the final product to obtain; the second stage is about the preparation and transformation of the necessary photochromes and flat colours on the basis of the colours of the "Pantone" scale; the third stage is about the use of an own colour chart, equivalent to the "Pantone" and a software to transfer the colours from the "Pantone" scale to the own colour chart; the fourth stage consists of the reproduction of of the tone scale until to achieve an approximation up to a 97% of the colours of the own colour chart; the fifth stage is about the calibration of the tone scale until to achieve a 99% of approximation and the sixth stage consists of the preparation of the engaving images and storage of the information **characterized** because in the 2^{nd} stage the "Pantone" scale is reproduced in the own chart with the cyan, magenta and yellow colours from performing a pure reduction synthesis of colours; the third stage consists of three steps. The first step is about the digital separation of the part composed with the CYM colours from that of the "Pantone" colours; the second step consists of processing the part that includes the CYM colours, using a TetraChtome output profile made up by the inks of enhanced gamut and a TetraChrome input profile made up by an owner profile with 7000 spectrometric inputs and obtaining a file of suitable colours to its reproduction with inks of enhanced gamut or normal gamut and the third step is is about the transformation of the "Pantone" colours from the original file to the own colour chart. In the third and fourth stages the software used provides a rippeared medium of the colour in 16 bits.

2. Procedure, in accordance with the claim number 1, **characterized** because there are three steps during the transformation of the "Pantone" colours to the own colour chart. The first step is about the selection of the colours which are nearer to the original. The second step is the application of the secondary curves to achieve the half tones of the spot colours and its conversion to full colours. The last step consists of developing the tertiary curves to the gradations.

3. Procedure, in accordance with the claim number 1, **characterized** because the black colour is added to the use of CYM inks as an extra colour for printers with inadequate registration.

4. Procedure, in accordance with the claim number 1, **characterized** because the white colour is used as printing base in "OPP" materials or similar ones.

5. Procedure, in accordance with the claim number 1, **characterized** because the prepress is performed for Offset systems, Flexography, Letterpress, DTP digital systems and similar ones.

6. Procedure, in accordance with the claim number 1, **characterized** because in the fourth stage, the software of the colour analysis takes the approximation between a 96 and a 97% of the tone value of the original , using secondary and tertiary curves.

7. Procedure, in accordance with the claim number 1, **characterized** because the set of engraving curves reproduces the tone scale up to 1%.
